(19) Europäisches Patentamt / European Patent Office / Office européen des brevets

(11) **EP 4 228 040 A1**

(12) **DEMANDE DE BREVET EUROPEEN**

(43) Date de publication:
**16.08.2023 Bulletin 2023/33**

(21) Numéro de dépôt: **23156512.8**

(22) Date de dépôt: **14.02.2023**

(51) Classification Internationale des Brevets (IPC):
**H01M 8/04313** (2016.01)    **H01M 8/0432** (2016.01)
**H01M 8/0438** (2016.01)    **H01M 8/04537** (2016.01)
**H01M 16/00** (2006.01)

(52) Classification Coopérative des Brevets (CPC):
**H01M 16/006; H01M 8/04313; H01M 8/0432;
H01M 8/04425; H01M 8/04559; H01M 8/04589;
H01M 8/04619;** H01M 2250/10

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **15.02.2022 FR 2201314**

(71) Demandeur: **Powidian**
**37700 La Ville aux Dames (FR)**

(72) Inventeurs:
• **ROMARY, Florian**
**37700 LA-VILLE-AUX-DAMES (FR)**
• **JADDI, Hicham**
**17180 PERIGNY (FR)**

(74) Mandataire: **Lavoix**
**2, place d'Estienne d'Orves**
**75441 Paris Cedex 09 (FR)**

(54) **PROCÉDÉ D'ESTIMATION DE L'AUTONOMIE RESTANTE D'UN GROUPE ÉLECTROGÈNE AUTONOME ET DISPOSITIFS ASSOCIÉS**

(57)    La présente invention concerne un procédé d'estimation de l'autonomie restante d'un groupe électrogène (10), le groupe électrogène (10) comprenant une pile à combustible et une alimentation auxiliaire, la pile à combustible étant alimentée par du dihydrogène provenant d'une alimentation en dihydrogène (20), le procédé d'estimation comportant :
- la mesure d'au moins une grandeur électrique relative à la pile à combustible, de la température du dihydrogène et de la pression en dihydrogène,
- le calcul de la masse de dihydrogène consommé à partir de la grandeur électrique mesurée, et
- la déduction du volume restant dans l'alimentation (20) en utilisant la masse de dihydrogène consommé, la température mesurée et la pression mesurée.

FIG.1

**Description**

La présente invention concerne un procédé d'estimation de l'autonomie restante d'un groupe électrogène autonome. La présente invention se rapporte également à un dispositif d'estimation correspondant et à un groupe électrogène comportant un tel dispositif d'estimation.

La présente invention concerne un procédé d'estimation de l'autonomie restante d'un groupe électrogène autonome. La présente invention se rapporte également à un dispositif d'estimation correspondant et à un groupe électrogène comportant un tel dispositif d'estimation.

Pour un certain nombre d'applications impliquant une charge importante à alimenter, par exemple 110 kiloWatts, la connexion au réseau électrique est difficile voire impossible. C'est notamment le cas pour des applications éphémères comme des travaux ou des événements ponctuels tels un concert ou un meeting. Un autre exemple est celui des antennes ou des relais positionnés dans des zones difficiles d'accès.

Pour cela, il est connu d'utiliser des groupes électrogènes fonctionnant totalement ou partiellement sur carburant fossile.

Toutefois, de tels groupes électrogènes s'avèrent bruyants à l'usage.

De plus, ces groupes électrogènes présentent un mauvais bilan écologique en impactant la qualité de l'air et en produisant du carbone.

En outre, ils s'avèrent peu adaptables à la charge, ce qui génère une surconsommation augmentant encore ce mauvais bilan pour l'environnement.

Il a donc été proposé d'utiliser des groupes électrogènes basés sur l'hydrogène.

Toutefois, l'entretien et la maintenance de cette station autonome est difficile en pratique. Le principe de précaution impose alors d'effectuer des opérations d'entretien et de maintenance très fréquemment pour éviter une mise hors service de la station autonome, conduisant à des opérations parfois superflues.

Il existe donc un besoin pour un procédé permettant de diminuer la réalisation d'opérations d'entretien et de maintenance superflues.

A cet effet, la description décrit un procédé d'estimation de l'autonomie restante d'un groupe électrogène, le groupe électrogène comprenant une pile à combustible et une alimentation auxiliaire, la pile à combustible étant alimentée par du dihydrogène provenant d'une alimentation en dihydrogène, le procédé d'estimation comportant la mesure d'au moins une grandeur électrique relative à la pile à combustible, de la température du dihydrogène et de la pression en dihydrogène, le calcul de la masse de dihydrogène consommé à partir de la grandeur électrique mesurée, et la déduction du volume restant dans l'alimentation en utilisant la masse de dihydrogène consommé, la température mesurée et la pression mesurée.

Selon des modes de réalisation particuliers, le procédé d'estimation présente une ou plusieurs des caractéristiques suivantes, prise(s) isolément ou selon toutes les combinaisons techniquement possibles :

- lors du calcul, le calcul de la masse de dihydrogène consommé prend également en compte le rendement de la pile à combustible.
- lors de la mesure, une grandeur électrique mesurée est le courant délivré par la pile à combustible.
- lors du calcul, le débit massique de dihydrogène consommé est obtenu par application d'une loi de Faraday sur le courant délivré par la pile à combustible.
- lors de la mesure, il est également mesuré la température du groupe électrogène, les températures du groupe électrogène et du dihydrogène étant mesurées en utilisant un même capteur de température.
- lors de la mesure, il est également mesuré la température de l'environnement du groupe électrogène, les températures de l'environnement du groupe électrogène et du dihydrogène étant mesurées en utilisant un même capteur de température.
- lors de la déduction, il est utilisé la loi de Van der Waals.
- le procédé comporte, en outre, la réception de la puissance consommée par l'utilisateur du groupe électrogène, et la détermination de l'autonomie temporelle restante du groupe électrogène en fonction du volume restant dans l'alimentation et de la puissance consommée par l'utilisateur du groupe électrogène.

La description décrit également un dispositif d'estimation de l'autonomie restante d'un groupe électrogène, le groupe électrogène comprenant une pile à combustible et une alimentation auxiliaire, la pile à combustible étant alimentée par du dihydrogène provenant d'une alimentation en dihydrogène, le dispositif d'estimation comportant un capteur de mesure d'au moins une grandeur électrique relative à la pile à combustible, un capteur de la température du dihydrogène, un capteur de la pression en dihydrogène, et un calculateur propre à calculer la masse de dihydrogène consommé à partir de la grandeur électrique mesurée, et déduire le volume restant dans l'alimentation en utilisant la masse de dihydrogène consommé, la température mesurée et la pression mesurée.

La description concerne aussi un groupe électrogène comprenant une pile à combustible et une alimentation auxiliaire, la pile à combustible étant alimentée par du dihydrogène provenant d'une alimentation en dihydrogène, le groupe électrogène comprenant, en outre, un dispositif d'estimation tel que précédemment décrit.

Dans la présente description, l'expression « propre à » signifie indifféremment « adapté pour », « adapté à » ou « configuré pour ».

Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un exemple de groupe électrogène comprenant un système d'alimentation en énergie électrique,
- la figure 2 est une représentation schématique de parties du système d'alimentation en énergie électrique de la figure 1,
- la figure 3 est un ordinogramme d'un exemple de mise en oeuvre d'un procédé d'estimation de l'autonomie restante de l'installation, et
- la figure 4 est un ordinogramme d'un exemple de mise en oeuvre plus élaborée d'un procédé d'estimation de l'autonomie restante de l'installation.

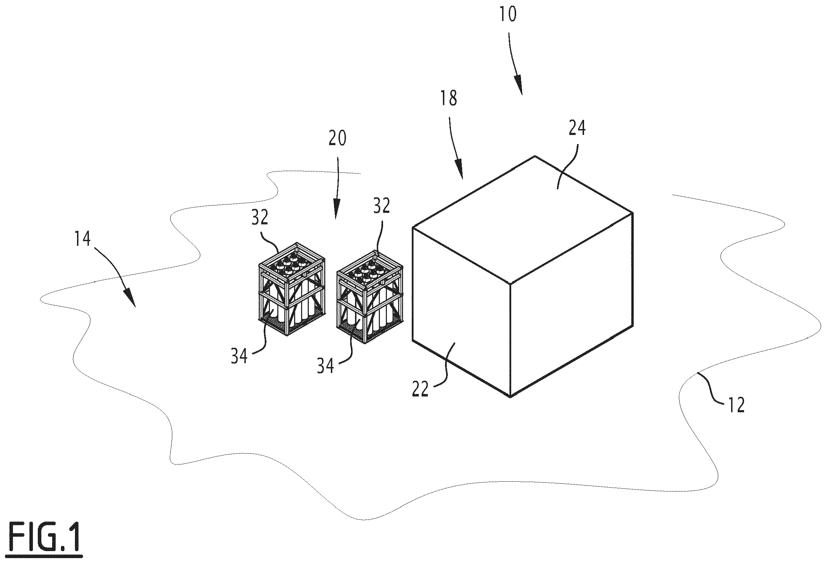

Il est représenté dans la figure 1 un groupe électrogène 10.

Le groupe électrogène 10 est destiné à fournir de l'électricité de manière autonome.

Le groupe électrogène 10 est ainsi une station de de production d'électricité autonome, mobile et silencieuse.

Ainsi que cela apparaîtra dans la suite de la description, le groupe électrogène 10 est un groupe électrogène à l'hydrogène, c'est-à-dire un groupe électrogène alimenté par l'hydrogène (ou plus précisément du dihydrogène).

Comme l'indique de manière schématique la frontière 12, le groupe électrogène 10 est installé dans une région éloignée comme une île ou une région montagneuse.

Le groupe électrogène 10 comporte un système d'alimentation en énergie électrique 14.

Le système d'alimentation 14 comporte une structure 18 et une alimentation en dihydrogène 20.

La structure 18 est posée ou fixée au sol et comprend des parois latérales 22 et un toit 24 définissant un espace intérieur.

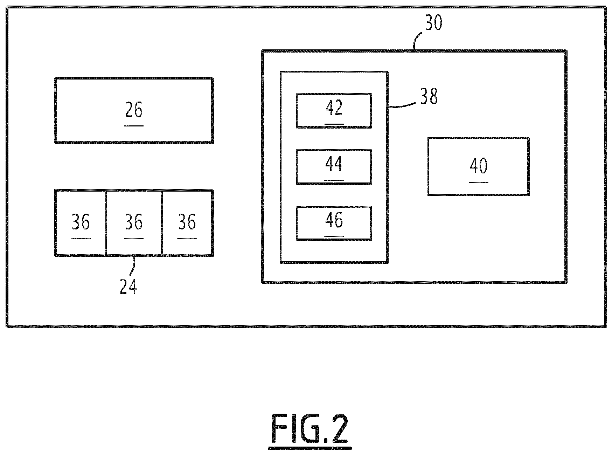

Dans cet espace intérieur, différents éléments du système d'alimentation 14 sont présents parmi lesquels ceux représentés sur la figure 2 qui présente une partie du système d'alimentation 14.

En référence à cette figure, le système d'alimentation 14 comporte une pile à combustible 26, une alimentation auxiliaire 28 et un dispositif d'estimation 30.

Une pile à combustible est un générateur dans lequel la fabrication de l'électricité se fait grâce à l'oxydation sur une électrode d'un combustible réducteur couplée à la réduction sur l'autre électrode d'un oxydant.

Autrement formulé, la pile à combustible 26 est une unité génératrice électrochimique à combustible gazeux par réaction d'oxydoréduction entre un premier fluide et un deuxième fluide.

Dans l'exemple décrit, le premier fluide, c'est-à-dire le combustible, est le dihydrogène et le deuxième fluide, c'est-à-dire l'oxydant, est le dioxygène présent dans l'air entourant la structure.

Avantageusement, la pile à combustible 26 est une pile utilisant la technologie à membrane d'échange de protons (plus souvent désignée sous l'abréviation PEM renvoyant à la dénomination anglaise de « Proton Exchange Membrane »).

La pile à combustible 26 ainsi alimentée par une alimentation en dihydrogène 20 visible sur la figure 1 par une connexion fluidique non représentée.

De préférence, comme représenté sur la figure 1, l'alimentation en dihydrogène est disposée à l'extérieur de la structure 18.

L'alimentation en dihydrogène 20 est branchée à plusieurs cadres 32, chaque cadre 32 comprenant des bouteilles 34.

Selon l'exemple décrit, l'alimentation auxiliaire 28 est une alimentation de stockage tampon comportant plusieurs batteries 36.

Les batteries 36 permettent de stocker l'énergie de la pile à combustible 26 qui n'est pas consommée par l'ensemble des charges et de la relâcher lorsque l'énergie de la pile à combustible 26 devient insuffisante.

Les batteries 36 sont, par exemple, des batteries de type lithium-ion pour garantir une bonne longévité du système d'alimentation.

Selon un cas particulier, l'alimentation auxiliaire 28 comporte également un onduleur pour former un dispositif de stockage d'énergie batterie parfois dénommé BESS en référence à l'abréviation de dénomination anglaise de « Battery Energy Storage System ».

Selon des modes de réalisation différents, le système d'alimentation 14 comporte un ou plusieurs des éléments suivants: un convertisseur configuré pour ajuster la tension générée par la pile à combustible 26, une alimentation de stockage tampon configurée pour stocker l'énergie de la pile à combustible 26 qui n'est pas consommée par un ensemble de charges connectées au système d'alimentation 14, un onduleur configuré pour convertir une tension continue fournie par la pile à combustible 26 en tension alternative, et/ou un transformateur configuré pour adapter en amplitude la tension fournie par la pile à combustible 26.

En variante ou en complément, le système d'alimentation 14 comporte, en outre, une alimentation auxiliaire supplémentaire. A titre d'exemple, l'alimentation auxiliaire supplémentaire est un onduleur d'une cellule photovoltaïque, un autre groupe électrogène, un électrolyseur, une éolienne, une hydrolienne ou une unité de géothermie.

Le dispositif d'estimation 30 est propre à mettre en oeuvre un procédé d'estimation de l'autonomie restante du groupe électrogène 10.

Le dispositif d'estimation 30 comporte un ensemble de capteurs 38 et un calculateur 40.

L'ensemble de capteurs 38 comprend, selon l'exemple décrit, un capteur de mesure d'au moins une grandeur électrique relative à la pile à combustible 26, dit capteur de grandeur électrique 42, un capteur de la température du dihydrogène, dit capteur de température 44, et un capteur de la pression en dihydrogène, dit capteur de pression 46.

Le capteur de grandeur électrique 42 est propre à capter au moins une grandeur électrique comme le rendement ou la puissance de la pile à combustible 26.

Pour cela, le capteur de grandeur électrique 42 est, par exemple, propre à mesurer le courant et la tension délivrés en sortie de la pile à combustible 26.

En complément, l'ensemble de capteurs 38 comporte un capteur de température du groupe électrogène 10 et/ou un capteur de température de l'environnement du groupe électrogène 10.

Dans certains modes de réalisation, les capteurs de températures sont confondus, les températures du groupe électrogène 10, de l'environnement du groupe électrogène 10 et du dihydrogène étant relativement proches.

Le calculateur 40 est propre à effectuer des opérations à partir des mesures acquises par l'ensemble de capteurs 38 pour obtenir l'autonomie restante du groupe électrogène 10.

Le calculateur 40 est un dispositif électronique propre à manipuler et/ou transformer des données représentées comme des quantités électroniques ou physiques dans des registres et/ou des mémoires en d'autres données similaires correspondant à des données physiques dans des mémoires, des registres ou d'autres types de dispositifs d'affichage, de transmission ou de mémorisation.

Le calculateur 40 comporte un processeur comprenant une unité de traitement de données, des mémoires et un lecteur de support d'informations.

Un support lisible d'informations est un support lisible par le système, usuellement par l'unité de traitement de données. Le support lisible d'informations est un médium adapté à mémoriser des instructions électroniques et capables d'être couplé à un bus d'un système informatique.

A titre d'exemple, le support lisible d'informations est une disquette ou disque souple (de la dénomination anglaise de « floppy disk »), un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations est mémorisé un programme d'ordinateur comprenant des instructions de programme.

Le programme d'ordinateur est chargeable sur l'unité de traitement de données et est adapté pour entraîner la mise en oeuvre d'étapes du procédé.

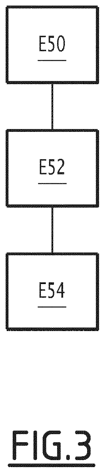

La nature des opérations effectuées par le calculateur 40 est maintenant décrite en référence à la figure 3 qui illustre un exemple de mise en oeuvre d'un procédé d'estimation de l'autonomie restante du groupe électrogène 10.

Le procédé d'estimation comporte une étape de mesure E50, une étape de calcul E52 et une étape de déduction E54.

Lors de l'étape de mesure E52, l'ensemble de capteurs 38 mesure au moins une grandeur électrique relative à la pile à combustible 26, la température du dihydrogène et la pression en dihydrogène.

Dans l'exemple décrit, les grandeurs électriques mesurées sont le courant et la tension de la pile à combustible 26, ce qui donne accès à la puissance de la pile à combustible 26.

Pour la suite, il est aussi supposé que le calculateur 40 a accès à la puissance active consommée et l'état de charge des batteries 36 sans que cela soit obligatoire.

Lors de l'étape de calcul E52, le calculateur 40 calcule la masse de dihydrogène consommé à partir de la grandeur électrique mesurée.

La masse de dihydrogène consommé $m_{H2}$ correspond à l'intégrale du débit massique de dihydrogène $\dot{m}_{H2}$ depuis le début de l'utilisation de l'alimentation en dihydrogène 10.

Selon l'exemple décrit, le calculateur 40 calcule la valeur de débit massique de dihydrogène $\dot{m}_{H2}$ plusieurs instants, les instants étant séparés d'un intervalle de temps constant puis le calculateur obtient la masse de dihydrogène consommé comme la somme des $\dot{m}_{H2} * \Delta t$ pour toutes les valeurs de débit massique de dihydrogène $\dot{m}_{H2}$ calculées.

L'intervalle de temps $\Delta t$ est, par exemple, de 10 secondes, sans que cela soit limitatif.

Pour calculer le débit massique de dihydrogène $\dot{m}_{H2}$, le calculateur 40 applique une loi de Faraday sur le courant délivré par la pile à combustible. De ce fait, il sera considéré dans la suite que le calculateur 40 applique une technique de Faraday.

La loi de Faraday relie le nombre de moles des substances électroactives consommées ou produites à la charge électrique totale ayant été transférée. Comme chaque électron créant le courant provient ici de la masse correspondante d'hydrogène, il vient :

$$\dot{n}_{H2} = \frac{N_{cells}}{2F} . I$$

Où :

- $\dot{n}_{H2}$ le débit molaire de dihydrogène consommé en *mol/s,* le débit molaire $\dot{n}_{H2}$ étant relié au débit massique de dihydrogène consommé $\dot{m}_{H2}$ par la masse molaire M en *g/mol* du dihydrogène par la

relation $\dot{m_{H2}} = \dot{n}_{H2} * M$

- $N_{cells}$ est le nombre de cellules dans un ensemble de cellules électrochimiques, généralement appelé stack,
- $I$ est le courant en sortie de la pile à combustible, et
- $F$ est la constante de Faraday.

Le nombre de cellules dans le stack correspondant au rapport entre la tension du stack $U_{tot}$ et la tension d'une cellule $U_{cell}$, la relation suivante peut être écrite pour le débit massique de dihydrogène consommé $\dot{m}_{H2}$ :

$$\dot{m_{H2}} = \frac{U_{tot}}{U_{cell}} \frac{M}{2F} I$$

En effectuant ce calcul dès qu'une durée égale à l'intervalle de temps $\Delta t$ constant s'est écoulé, il est possible d'obtenir la masse de dihydrogène consommé $m_{H2}$.

Ce qui vient d'être décrit permet de calculer la masse de dihydrogène consommé depuis le début de l'utilisation de l'alimentation en dihydrogène 10.

Lors de l'étape de déduction E54, le calculateur 40 déduit le volume restant dans l'alimentation en utilisant la masse de dihydrogène consommé, la température mesurée et la pression mesurée.

Ainsi, il s'agit maintenant de déterminer le volume $V$ qui est constant.

Pour cela, le calculateur 40 peut utiliser la masse de dihydrogène consommé $m_{H2}$ de l'étape précédente.

De fait, il peut être remarquer que, pour deux instants $t_1$ et $t_2$, il vient :

$$m_1 = \rho_1 V \text{ et } m_2 = \rho_2 V$$

Où $\rho_i$ la masse volumique de dihydrogène à l'instant $t_i$.

La différence des deux équations précédentes permet d'obtenir la relation suivante :

$$V = \frac{m_2 - m_1}{\rho_2 - \rho_1} = \frac{\dot{m}}{\rho_2 - \rho_1}$$

Dans cette expression, il reste à obtenir les valeurs des masses volumiques $\rho_1$ et $P2$.

Or, il est connu que :

$$\rho = \frac{m}{V} = \frac{n \times M}{V}$$

Où :

- $n$ est la quantité de matière (nombre de moles) de dihydrogène restant, et
- $M$ la masse molaire du dihydrogène.

Il reste donc uniquement à déterminer la valeur de $n$.

Pour cela, le calculateur 40 utilise la loi de Van der Waals.

Cette loi s'exprime mathématiquement comme :

$$\left(P + \frac{an^2}{V^2}\right)(V - nb) = nRT$$

Où :

- $V$ est le volume de l'alimentation en dihydrogène 20,
- $R$ est la constante des gaz parfaits,
- $T$ est la température mesurée,
- $P$ est la pression dans l'alimentation en dihydrogène 20,
- $a$ est le terme de cohésion (constant), et
- $b$ est le covolume molaire (constant).

Dans la dernière équation, seuls $n$ et $V$ sont des inconnues.

Il convient d'utiliser une technique pour se ramener à une équation à une inconnue, celle-ci étant le volume $V$.

En réécrivant l'équation de Van der Waals pour la mettre sous la forme d'une équation du troisième degré dont l'inconnue est $n$, il vient :

$$-\frac{ab}{V^2}n^3 + \frac{a}{V}n^2 - (RT + Pb)n + PV = 0$$

En résolvant cette équation, il apparaît que le résultat peut se ramener à une équation du type :

$$n = X \times V$$

Dans l'expression précédente, $X$ est une variable qui a la particularité de ne dépendre que des paramètres $a, b, P, R$ et $T$. Cette variable $X$ peut donc être calculée sachant la température et la pression.

Ainsi, il vient les relations suivantes :

$$\rho = \frac{n \times M}{V} = \frac{XVM}{V} = XM$$

Ceci implique pour le calcul du volume :

$$V = \frac{\dot{m}}{\rho_2 - \rho_1} = \frac{\dot{m}}{(X_2 - X_1)M}$$

Cette technique permet ainsi d'obtenir un « volume instantané » qui est moyenné au cours du temps pour avoir une valeur qui converge assez rapidement vers le volume réel. Cela permet notamment de s'affranchir des incertitudes sur les différentes mesures.

Un tel procédé permet ainsi de déterminer la quantité de dihydrogène restant de manière précise.

Cette précision provient notamment du fait que la technique de Faraday proposée à l'étape de calcul E52 est bien adaptée.

En effet, les tests ont montré que la technique de Faraday est plus fiable que deux autres techniques.

Ainsi, la technique de Faraday est plus fiable qu'une technique basée sur le débit maximal.

Dans cette technique, il est supposé que le calculateur connaît le débit maximal $\dot{m}_{max}$ de dihydrogène pour une puissance nominale de fonctionnement $P_f$. Par exemple, cette information provient des données du constructeur de la pile à combustible.

Dans un tel cas, comme le débit massique et la puissance sont proportionnelles, il vient :

$$\dot{m}_{H2} = \frac{P_{mes}}{P_f} \dot{m}_{max}$$

Où :

- $\dot{m}_{H2}$ est la quantité de dihydrogène consommé, et
- $P_{mes}$ est la puissance mesurée de la pile à combustible.

La technique de Faraday est également plus fiable qu'une deuxième technique qui est une technique basée sur l'énergie spécifique.

L'énergie spécifique est liée au courant à la sortie de la pile à combustible par une relation dépendant de la courbe du rendement.

Cette relation peut être approximée par un polynôme, notamment un polynôme du deuxième degré.

La masse de dihydrogène consommé est alors le rapport entre la valeur de l'énergie spécifique et la puissance en sortie de la pile à combustible.

La puissance mesurée en sortie de la pile à combustible s'obtient par calcul du produit de la tension en sortie de la pile à combustible avec le courant en sortie de la pile à combustible.

Les tests ont montré que les deux techniques précédentes conduisent à une surestimation de la quantité de dihydrogène consommé au contraire de la technique de Faraday utilisée par le présent procédé.

La précision dans la détermination du volume de dihydrogène est obtenue sans intervention de l'utilisateur.

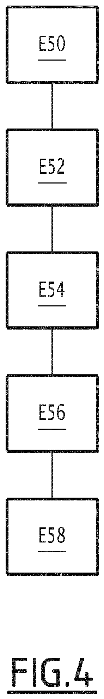

Il est possible d'exprimer l'autonomie restante du groupe électrogène 10 de manière différente. En particulier, selon un mode de réalisation particulier correspondant à l'ordinogramme de la figure 4, le procédé permet aussi d'évaluer l'autonomie restante en temps pour finalement optimiser le basculement et le changement des bouteilles 34 dès qu'elles seront vidées.

Le procédé d'estimation comporte, en plus des étapes décrites pour le procédé d'estimation de la figure 3, une étape de réception E56 et une étape de détermination E58.

Lors de l'étape de réception E56, le calculateur 40 reçoit une puissance consommée par l'utilisateur.

Cette puissance consommée cherche à être la plus représentative possible du profil de consommation de l'utilisateur.

Il convient de comprendre ici qu'il s'agit d'une puissance consommée équivalente puisque le profil de consommation n'est jamais parfaitement identique d'une journée à l'autre.

Le profil de consommation est, dans l'exemple proposé, exprimée sous la forme d'une pondération de la puissance moyenne consommée sur une première durée et de la puissance moyenne consommée sur une deuxième durée, à savoir :

$$P = \alpha_{\Delta t1}.P_{\Delta t1} + \alpha_{\Delta t2}.P_{\Delta t2}$$

Où :

- P désigne le profil de consommation,
- $P_{\Delta t1}$ désigne la puissance moyenne consommée sur la première durée $\Delta t1$,
- $P_{\Delta t2}$ désigne la puissance moyenne consommée sur la deuxième durée $\Delta t2$,
- $\alpha_{\Delta t1}$ désigne un premier coefficient de pondération, et
- $\alpha_{\Delta t2}$ désigne un deuxième coefficient de pondération.

La première durée $\Delta t1$ correspond à une durée longue par rapport à la deuxième durée $\Delta t2$ qui est une durée courte, par exemple une durée au moins cent fois plus grande.

Ici, $\Delta t1$ est égale à 24 heures et $\Delta t2$ est égale à 5 minutes.

Les deux coefficients de pondération $\alpha_{\Delta t1}$ et $\alpha_{\Delta t2}$ sont choisis pour correspondre à la consommation sur une période antérieure, par exemple par un ajustement numérique.

Dans certains cas, l'étape de réception E56 est réalisée par réception de la consommation sur la période antérieure et c'est le calculateur 40 qui vient déterminer les deux coefficients de pondération $\alpha_{\Delta t1}$ et $\alpha_{\Delta t2}$.

Il est à observer qu'un profil régulier comme la consommation d'un bâtiment conduit à des valeurs de coefficients de pondération $\alpha_{\Delta t1}$ et $\alpha_{\Delta t2}$ très différent d'un profil irrégulier comme le cas d'un chantier avec des variations importante pendant une durée courte.

De ce fait, selon un autre mode de réalisation, le calculateur 40 reçoit une nature de profil, régulier ou irrégulier et en déduit des coefficients de pondération $\alpha_{\Delta t1}$ et $\alpha_{\Delta t2}$, par exemple basés sur des valeurs prédéfinis.

Dans chacun des cas, le calculateur 40 dispose de la puissance consommée par l'utilisateur.

Lors de l'étape de détermination, le calculateur 40 détermine l'autonomie temporelle restante en fonction du volume restant et du profil de consommation.

Pour cela, le calculateur 40 calcule l'énergie restante $E_r$.

L'énergie restante $E_r$ est la somme de l'énergie disponible dans l'alimentation auxiliaire 28 et de l'énergie éventuellement produite par la pile à combustible 26.

Le calculateur 40 détermine, par exemple, l'énergie disponible dans l'alimentation auxiliaire 28 en utilisant la donnée de l'état de charge et la valeur maximale d'énergie stockable dans l'alimentation auxiliaire 28.

Dans l'exemple décrit, pour l'énergie de la pile à combustible 26, le calculateur 40 l'obtient en calculant le produit de la masse restante en dihydrogène par le rendement mesuré de la pile à combustible 26 et le pouvoir calorifique inférieure du dihydrogène.

L'autonomie temporelle restante est le rapport entre l'énergie restante $E_R$ et le profil de consommation P.

Cela permet ainsi d'obtenir une autonomie temporelle précise et surtout adapté à l'utilisateur du groupe électrogène 10.

D'autres modes de réalisation du procédé d'estimation qui vient d'être décrits sont envisageables.

En particulier, lorsque cela est techniquement possible, l'ordre des étapes peut être modifié. Par exemple, l'étape de réception E56 pourrait être mise en oeuvre avant dans l'ordinogramme de la figure 4.

Il est possible également de formuler les résultats sous des formes différentes, notamment sous forme de pourcentage ou en les exprimant avec une grandeur proportionnelle.

**Revendications**

1. Procédé d'estimation de l'autonomie restante d'un groupe électrogène (10), le groupe électrogène (10) comprenant une pile à combustible (26) et une alimentation auxiliaire (28), la pile à combustible (26) étant alimentée par du dihydrogène provenant d'une alimentation en dihydrogène (20), le procédé d'estimation comportant :

   - la mesure d'au moins une grandeur électrique relative à la pile à combustible (26), de la température du dihydrogène et de la pression en dihydrogène,
   - le calcul de la masse de dihydrogène consommé à partir de la grandeur électrique mesurée, et
   - la déduction du volume restant dans l'alimentation (20) en utilisant la masse de dihydrogène consommé, la température mesurée et la pression mesurée.

2. Procédé d'estimation selon la revendication 1, dans lequel, lors du calcul, le calcul de la masse de dihydrogène consommé prend également en compte le rendement de la pile à combustible (26).

3. Procédé d'estimation selon la revendication 1 ou 2, dans lequel, lors de la mesure, une grandeur électrique mesurée est le courant délivré par la pile à combustible (26).

4. Procédé d'estimation selon la revendication 3, dans lequel, lors du calcul, le débit massique de dihydrogène consommé est obtenu par application d'une loi de Faraday sur le courant délivré par la pile à combustible (26).

5. Procédé d'estimation selon l'une quelconque des revendications 1 à 4, dans lequel, lors de la mesure, il est également mesuré la température du groupe électrogène (10), les températures du groupe électrogène (10) et du dihydrogène étant mesurées en utilisant un même capteur de température (44).

6. Procédé d'estimation selon l'une quelconque des revendications 1 à 5, dans lequel lors de la mesure, il est également mesuré la température de l'environnement du groupe électrogène (10), les températures de l'environnement du groupe électrogène (10) et du dihydrogène étant mesurées en utilisant un même capteur de température (44).

7. Procédé d'estimation selon l'une quelconque des revendications 1 à 6, dans lequel, lors de la déduction, il est utilisé la loi de Van der Waals.

8. Procédé d'estimation selon l'une quelconque des revendications 1 à 7, dans lequel le procédé comporte, en outre :

   - la réception de la puissance consommée par l'utilisateur du groupe électrogène (10), et
   - la détermination de l'autonomie temporelle restante du groupe électrogène (10) en fonction du volume restant dans l'alimentation (20) et de la puissance consommée par l'utilisateur du groupe électrogène (10).

9. Dispositif d'estimation (30) de l'autonomie restante d'un groupe électrogène (10), le groupe électrogène (10) comprenant une pile à combustible (26) et une alimentation auxiliaire (28), la pile à combustible (26) étant alimentée par du dihydrogène provenant d'une alimentation en dihydrogène (20), le dispositif d'estimation (30) comportant :

- un capteur de mesure (42) d'au moins une grandeur électrique relative à la pile à combustible (26),
- un capteur de la température du dihydrogène (44),
- un capteur de la pression en dihydrogène (46), et
- un calculateur (40) propre à :

    - calculer la masse de dihydrogène consommé à partir de la grandeur électrique mesurée, et
    - déduire le volume restant dans l'alimentation (20) en utilisant la masse de dihydrogène consommé, la température mesurée et la pression mesurée.

**10.** Groupe électrogène (10) comprenant une pile à combustible (26) et une alimentation auxiliaire (28), la pile à combustible (26) étant alimentée par du dihydrogène provenant d'une alimentation en dihydrogène (20), le groupe électrogène (10) comprenant, en outre, un dispositif d'estimation (30) selon l'une quelconque des revendications 1 à 9.

FIG.1

FIG.2

E50

E52

E54

FIG.3

FIG.4

Europäisches
Patentamt

European
Patent Office

Office européen
des brevets

# RAPPORT DE RECHERCHE EUROPEENNE

Numéro de la demande

**EP 23 15 6512**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2005/058885 A1 (BROCKLIN ANDY VAN [US] ET AL) 17 mars 2005 (2005-03-17) * alinéas [0022], [0031], [0035] – [0038] * ----- | 1-10 | INV. H01M8/04313 H01M8/0432 H01M8/0438 H01M8/04537 H01M16/00 |
| X | CN 110 797 556 A (DATING WATER POWER S&T RES INSTITUTE CO LTD) 14 février 2020 (2020-02-14) * alinéas [0029], [0040], [0050] * ----- | 1-10 | |
| X | CN 110 676 492 A (WUHAN TROOWIN POWER SYS TECH CO LTD) 10 janvier 2020 (2020-01-10) * alinéa [0006] * ----- | 1-10 | |

**DOMAINES TECHNIQUES RECHERCHES (IPC)**

H01M

Le présent rapport a été établi pour toutes les revendications

| Lieu de la recherche | Date d'achèvement de la recherche | Examinateur |
|---|---|---|
| Munich | 5 juillet 2023 | Raimondi, Fabio |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 15 6512

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-07-2023

| Document brevet cité au rapport de recherche | Date de publication | Membre(s) de la famille de brevet(s) | Date de publication |
|---|---|---|---|
| US 2005058885 A1 | 17-03-2005 | AUCUN | |
| CN 110797556 A | 14-02-2020 | AUCUN | |
| CN 110676492 A | 10-01-2020 | AUCUN | |

Pour tout renseignement concernant cette annexe : voir Journal Officiel de l'Office européen des brevets, No.12/82